# EUROPÄISCHE PATENTSCHRIFT

(11) **EP 1 522 777 B1**
(45) Veröffentlichungstag und Bekanntmachung des Hinweises auf die Patenterteilung: **15.03.2006**
(21) Anmeldenummer: 04023138.3
(22) Anmeldetag: 29.09.2004
(51) Int. Cl.: F16K 11/20

(54) **Mischbatterie**
Mixing valve
Robinet mélangeur

(30) Priorität: 10.10.2003 DE 10347819
(43) Veröffentlichungstag der Anmeldung: 13.04.2005
(73) Patentinhaber: Grohe Water Technology AG & Co. KG, 58675 Hemer (DE)
(72) Erfinder: Luig, Frank-Thomas, 58708 Menden (DE); Steinhoff, Stefan, 59846 Sundern (DE); Salomon, Thomas, 33330 Gütersloh (DE); Salomon, Stefan, 33611 Bielefeld (DE); Stückerjürgen, Karl-Heinz, 33415 Verl (DE); Schmidt, Jörg, 33659 Bielefeld (DE)

(56) Entgegenhaltungen:
- DE-A- 3 820 855
- DE-C- 19 635 614
- DE-U- 20 308 906
- FR-A- 2 565 658
- GB-A- 1 195 882
- US-A- 2 633 872

## Beschreibung

Die Erfindung betrifft eine Mischbatterie mit einem Gehäuse, das Anschlüsse für Kalt- und Heißwasser sowie wenigstens einen Auslass für Kalt-, Heiß- oder Mischwasser aufweist und in dem zwei parallel angeordnete Ventile für den separaten Zufluss von Kalt- und Heißwasser vorgesehen sind, wobei die beiden Ventile jeweils eine Ventilspindel aufweisen, die einerseits mit einem Ventilglied und andererseits mit einem mit einer Betätigungseinrichtung gekoppelten Zahnradritzel verbunden ist.
Eine Mischbatterie dieser Art ist aus der Druckschrift DE 38 20 855 A1 bekannt. Hierbei ist vorgesehen, dass die auf der Ventilspindel angeordneten Zahnradritzel unmittelbar mit einer Innenverzahnung einer Betätigungseinrichtung in Eingriff gelangen, so dass bedingt durch das relativ große Übersetzungsverhältnis die Betätigungseinrichtung zu einer gewissen Schwergängigkeit neigen kann.

Der Erfindung liegt die Aufgabe zugrunde, eine verbesserte Mischbatterie mit einer relativ leichtgängigen Betätigungseinrichtung vorzuschlagen. Hierbei gehört es mit zur Aufgabe die Mischbatterie so auszubilden, dass Wartungs- und/oder Reparaturarbeiten einfach durchführbar sind.

Diese Aufgabe wird erfindungsgemäß mit einer Mischbatterie nach dem Oberbegriff des Anspruchs 1 dadurch gelöst, dass die beiden Zahnradritzel jeweils über als Vorgelege ausgebildete Zwischenzahnräder mit der Betätigungseinrichtung verbunden sind.
Weitere Ausgestaltungen der Erfindung sind in den Ansprüchen 2 bis 18 angegeben.

Mit den vorgeschlagenen Maßnahmen können die erforderlichen Bedienkräfte für die Betätigung der Mischbatterie erheblich reduziert werden.
Durch die Anordnung der beiden Ventile zur Mengenregulierung und Absperrung mit den Übersetzungsgetrieben in einer eine Baueinheit bildenden Ventilkartusche kann die Wartung und/oder Reparatur vereinfacht werden. Im Wartungsfall kann einfach die Ventilkartusche ausgetauscht werden.
Mit Hilfe von Klemmringen können die beiden Ventile mit ihrem Gehäuse stufenlos in der erforderlichen Drehstellung in der Ventilkartusche angeordnet und fixiert werden, so dass eine exakte Justierung werksseitig erfolgen kann.

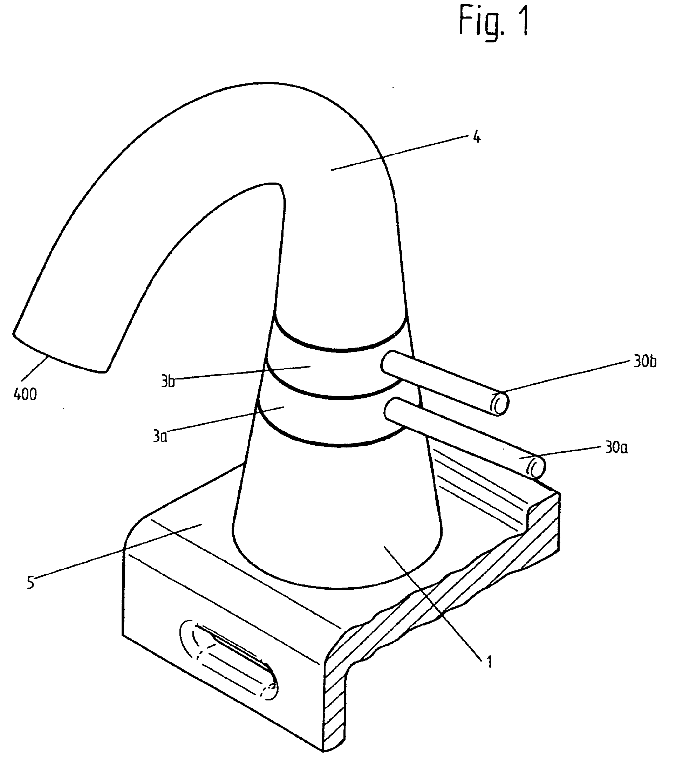

Ein Ausführungsbeispiel der Erfindung ist in der Zeichnung dargestellt und wird im Folgenden näher beschrieben. Es zeigt in der Zeichnung
- Figur 1: eine Mischbatterie in Perspektivansicht, montiert an einer zum Teil dargestellten Armaturenbank eines Waschbeckens;
- Figur 2: einen Teil der in Figur 1 gezeigten Mischbatterie im Längsschnitt in vergrößerter Darstellung;
- Figur 3: die in Figur 2 dargestellte Mischbatte-rie in der Schnittebene III;
- Figur 4: die in Figur 2 gezeigte Mischbatterie in der Schnittebene IV;
- Figur 5: die in Figur 2 gezeigte Ventilkartusche in Perspektivansicht;
- Figur 6: die in Figur 5 gezeigte Ventilkartusche ohne Kopfstück;

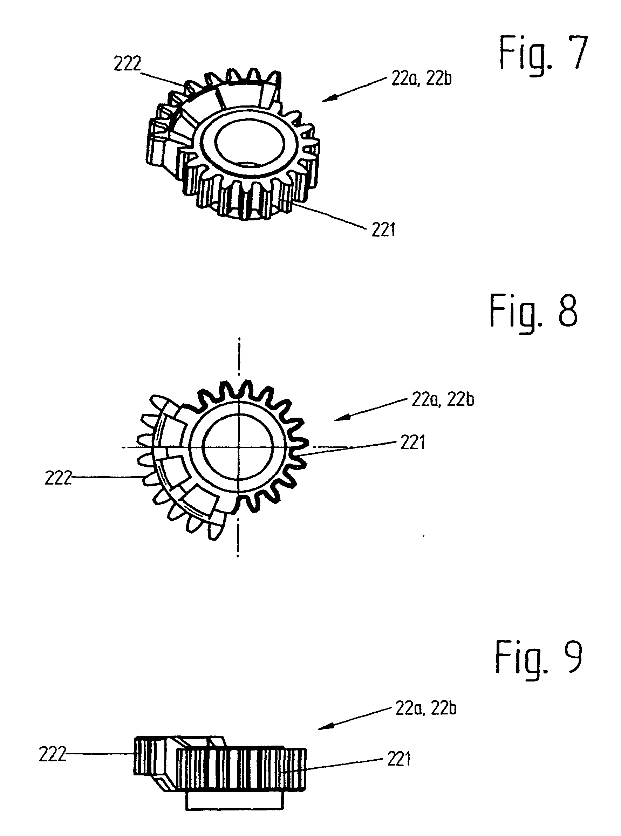

- Figur 7: das in Figur 4 gezeigte Zwischenzahnrad in Perspektivansicht;
- Figur 8: das in Figur 7 gezeigte Zwischenzahnrad in Draufsicht;
- Figur 9: das in Figur 8 gezeigte Zwischenzahnrad in Seitenansicht;
- Figur 10: das in Figur 2 gezeigte Zahnradritzel für das Ventil zur Kaltwassersteuerung in Perspektivansicht;
- Figur 11: das in Figur 10 gezeigte Zahnradritzel in Seitenansicht;
- Figur 12: das in Figur 11 gezeigte Zahnradritzel in Draufsicht;
- Figur 13: das in Figur 2 gezeigte Zahnradritzel für das Ventil zur Steuerung von Heißwasser in Perspektivansicht;
- Figur 14: das in Figur 13 gezeigte Zahnradritzel in Seitenansicht;
- Figur 15: das in Figur 14 gezeigte Zahnradritzel in Draufsicht.

Bei dem in der Zeichnung dargestellten Ausführungsbeispiel ist die Mischbatterie auf einer zum Teil dargestellten Armaturbank 5 eines Waschbeckens mit ihrem Batteriegehäuse 1 befestigt. Oberhalb des Batteriegehäuses 1 ist zunächst eine Betätigungseinrichtung 3a für den Kaltwasserzulauf und darüber eine Betätigungseinrichtung 3b für den Heißwasserzulauf angeordnet. Die beiden Betätigungseinrichtungen 3a, 3b sind dabei als drehbare Stellringe ausgebildet, an denen radial jeweils ein Hebelarm 30a, 30b vorsteht und die Bedienung der Mischbatterie erleichtert. Oberhalb der Betätigungseinrichtung 3b ist ein Auslaufkörper 4 für die Abgabe des in der Mischbatterie dosierten Wassers angeordnet. Der Auslaufkörper 4 ist dabei schwenkbar um eine Mittelachse 10 angeordnet, wobei das Wasser an einer Austrittsöffnung 400 als Freistrahl austritt. Alternativ kann die Mischbatterie auch an einer senkrechten Gebäudewand installiert werden, wobei dann der Auslaufkörper weniger stark gekrümmt auszubilden ist.

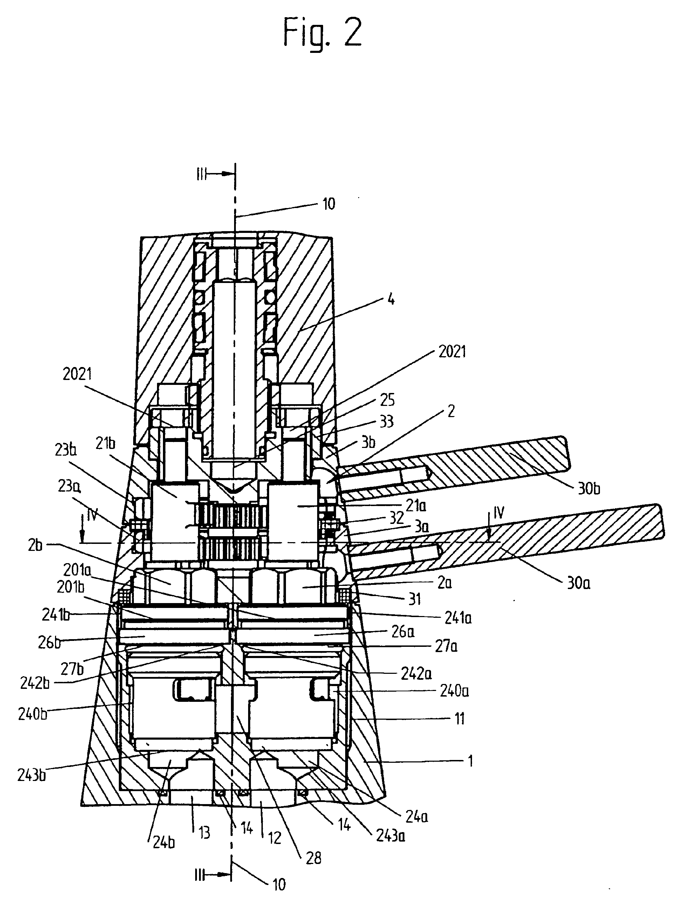

Wie es insbesondere aus Figur 2 der Zeichnung zu entnehmen ist, weist das Batteriegehäuse 1 eine Öffnung 11 auf, in die eine Ventilkartusche 2 einsetzbar ist. Im Grund der Öffnung 11 ist im Batteriegehäuse 1 ein Kanal 12 für Kaltwasser und eine Kanal 13 für Heißwasser ausgebildet, die einerseits an das Versorgungsleitungsnetz für Kalt- und Heißwasser angeschlossen sind. Andererseits ist der Kanal 12 mit einer Einlassöffnung 24a und der Kanal 13 mit einer Einlassöffnung 24b der Ventilkartusche 2 verbunden, wobei zur Abdichtung im Grund der Öffnung 11 jeweils die Kanäle 12, 13 umgebende Dichtringe 14 angeordnet sind, mit denen in der Stecklage der Ventilkartusche 2 ein dichter Übergang gewährleistet wird.

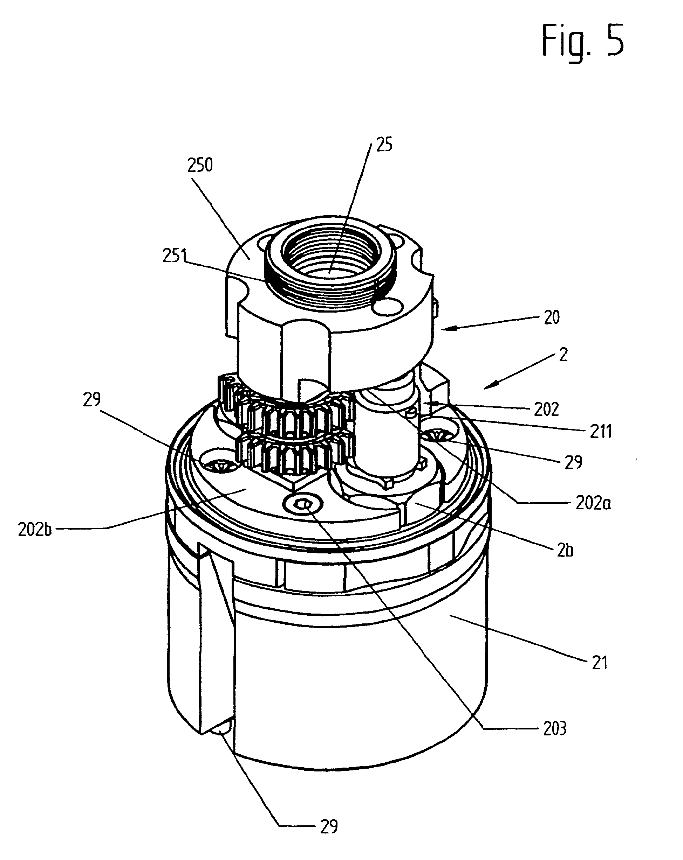

Die Ventilkartusche 2 ist, wie es insbesondere aus Figur 5 der Zeichnung zu entnehmen ist, als Baueinheit ausgebildet. In einem Kartuschengehäuse sind zwei parallel zueinander angeordnete bekannte Ventile 2a, 2b vorgesehen, wobei jedes Ventil 2a, 2b als Ventilglieder zwei Ventilscheiben aus Hartstoff hat, wobei die eine Ventilscheibe ortsfest im Ventil 2a, 2b gehalten ist, während die zweite Ventilscheibe mit einer Ventilspindel 20a, 20b zu der ortsfest gehaltenen Scheibe drehbar ist. Von der Absperrstellung bis zur maximalen Öffnungsposition kann dabei die Ventilspindel 20a, 20b um einen Drehwinkel von 90° bewegt werden.
In einer Aufnahmebohrung 240a ist das Ventil 2a für die Kaltwassersteuerung angeordnet, während in einer Aufnahmebohrung 240b das Ventil 2b für Heißwasser angeordnet ist. Die beiden Aufnahmebohrungen 240a, 240b sind hierbei parallel zur Mittelachse 10 angeordnet. Zum dichten Anschluss an die Einlassöffnungen 24a, 24b tragen die Ventile 2a, 2b stirnseitig einen Dichtring mit dem sie in der Stecklage dichtend an einer Schulter 243a, 243b der Aufnahmebohrungen 240a, 240b anliegen. Das über den Kanal 12 zuströmende Kaltwasser gelangt somit in das Ventil 2a und wird hier entsprechend der jeweiligen Ventilscheibenstellung über eine Radialöffnung in eine Mischkammer 28 abgegeben. Parallel dazu erfolgt der Zufluss von Heißwasser über den Kanal 13 in das Ventil 2b und von hier in Abhängigkeit von der jeweils gewählten Drehstellung der Ventilscheibe ebenfalls über eine Radialöffnung in die Mischkammer 28, wie es insbesondere auf Figur.2 der Zeichnung zu entnehmen ist.

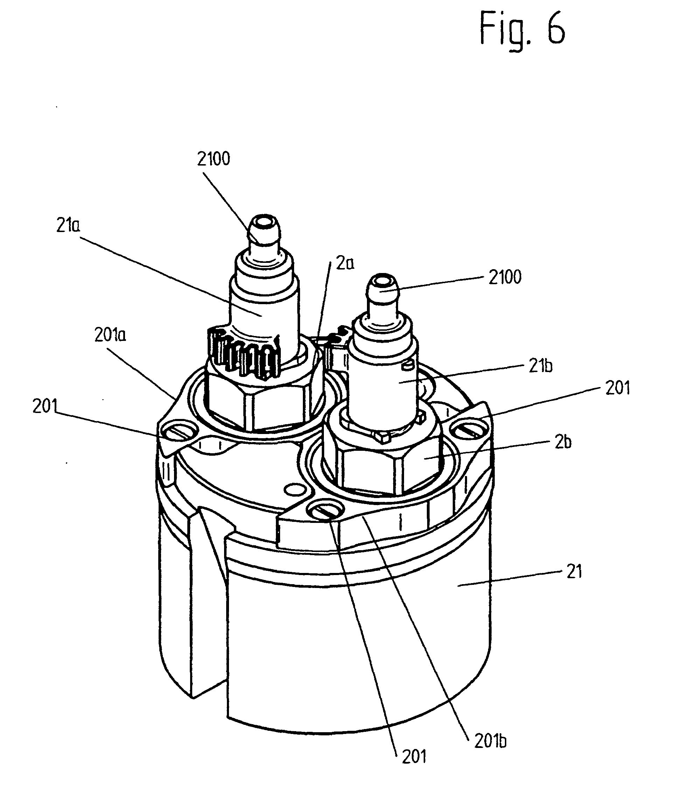

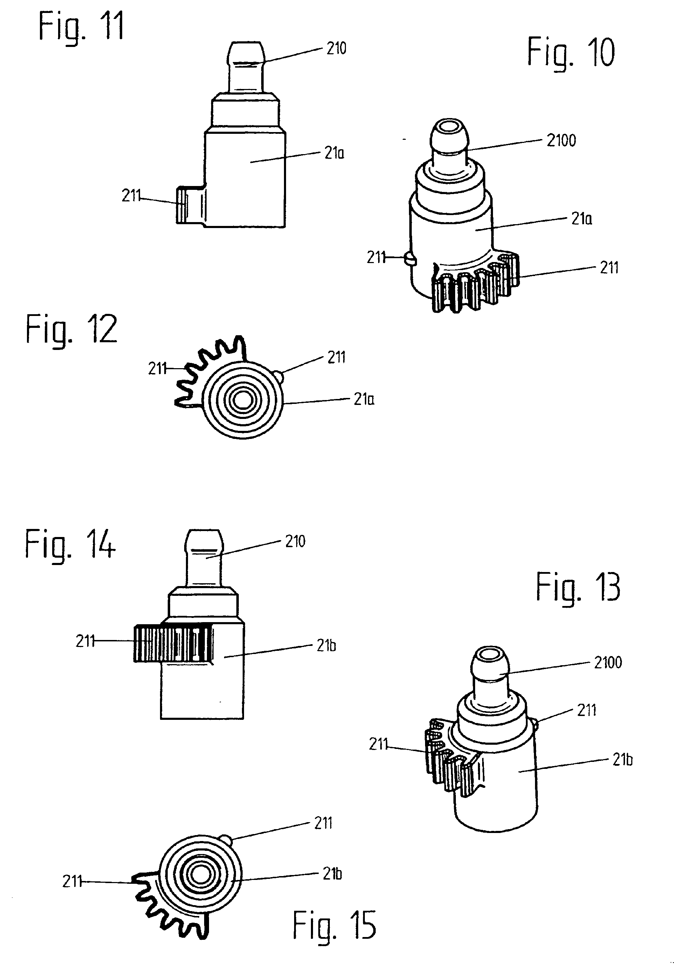

Das Ventil 2a für Kaltwasser und das Ventil 2b für Heißwasser steht jeweils mit einem Teilbereich aus den Aufnahmebohrungen 240a, 240b vor, an dem die Ventilspindeln 20a, 20b heraustreten. Auf der Ventilspindel 20a des Ventils 2a ist ein Zahnradritzel 21a und auf der Ventilspindel 20b des Ventils 2b ist ein Zahnradritzel 21b angeordnet, wie es insbesondere aus Figur 6 der Zeichnung zu entnehmen ist. Das Zahnradritzel 21a weist an einem Endbereich des Mantels ein Zahnsegment 211 auf, wie es insbesondere aus Figur 10 bis 12 der Zeichnung zu entnehmen ist. Dem gegenüber weist das Zahnradritzel 21b, wie es aus Figur 13 bis 15 der Zeichnung zu entnehmen ist, ebenfalls ein Zahnradsegment 211 auf, dass jedoch axial um wenigstens eine Länge des Zahnsegments versetzt angeordnet ist, so dass in der Stecklage in der Ventilkartusche 2 die beiden Zahnsegmente einander nicht berühren können. Außerdem tragen die beiden Zahnradritzel 21a, 21b im Mantelbereich jeweils eine radial vorstehende Markierung 211 mit denen die korrekte Drehstellung bei der Montage der Ventilkartusche 2 ermittelt werden kann. Darüber hinaus tragen die beiden Zahnradritzel 21a, 21b an der zu den Ventilen 2a, 2b abgekehrten Stirnseite jeweils einen Lagerzapfen 210, der mit einer ballig ausgebildeten Mantelfläche 2100 versehen ist. Die Zahnradritzel 21a, 21b sind dabei jeweils mit einer Ventilspindel 20a, 20b mittels Riefenverzahnung in der Stecklage drehfest verbunden.
Die so komplettierten Ventile 2a, 2b werden in die Aufnahmebohrungen 240a, 240b eingeschoben und können in der Stecklage stufenlos gedreht werden, bis die erforderliche Drehstellung erreicht ist. Sodann wird zum Ventil 2a ein Klemmring 201a und zum Ventil 2b ein Klemmring 201b stirnseitig auf das Kartuschengehäuse 21 aufgebracht und mittels Schrauben 201 verspannt. Der Klemmring 201a wirkt hierbei axial auf einen Ringbund 26a des Ventils 2a und der Klemmring 201b auf einen Ringbund 26b des Ventils 2b axial ein, so dass die beiden Ringbunde 26a, 26b gegen jeweils eine im Grund einer Aussenkung 241a, 241b ausgebildeten Schulter 242a, 242b gedrückt werden und somit reibschlüssig in der Drehstellung gesichert und axial gehalten werden. Gleichzeitig wird die Aufnahmebohrung 240a von einem O-Ring 27a und die Aufnahmebohrung 240b von einem O-Ring 27b gedichtet. Die exakte Ausrichtung der Drehstellung der beiden Ventile 2a, 2b erfolgt zweckmäßig mit einer auf die beiden Zahnradritzel 21a, 21b aufsteckbaren Ausrichtlehre (in der Zeichnung nicht dargestellt).

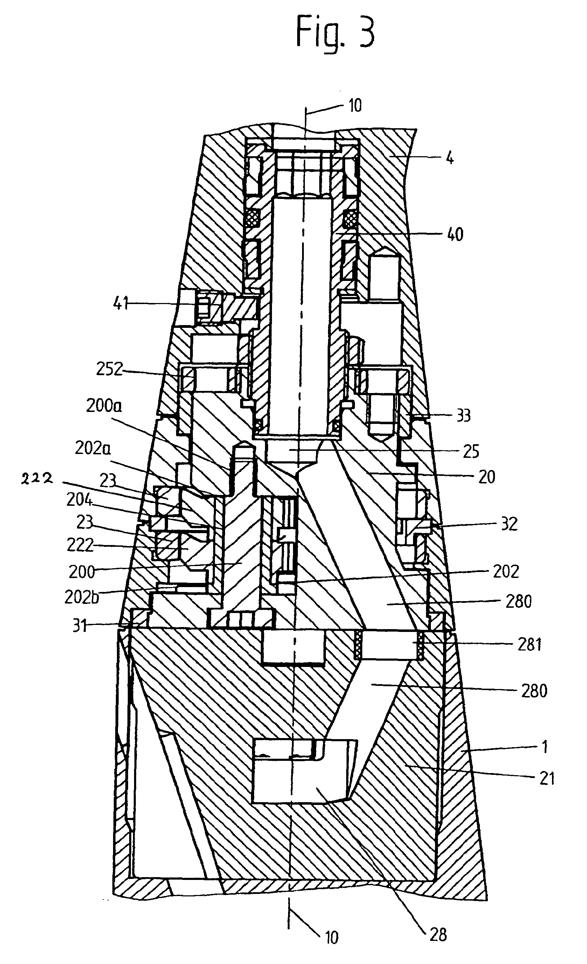

Anschließend wird das Kartuschengehäuse 21 mit einem Kopfstück 20 komplettiert. Das Kopfstück 20 weist eine Aussparung 202 auf, wie es insbesondere aus Figur 3 und 5 zu entnehmen ist, wobei die Aussparung 202 von einer oberen Stirnseite 202a und einer unteren Stirnseite 202b begrenzt ist. Parallel zur Mittelachse 10 ist hierbei im Kopfstück 20 eine Achse 200 angeordnet, die von der dem Kartuschengehäuse 21 zugekehrten Stirnseite eingeschoben werden kann und in der Stecklage mit einem Gewinde 200a befestigbar ist. Auf der Achse 200 ist eine Distanzhülse 204 angeordnet, die durch Reibschluss an den Stirnseiten 202a und 202b drehfest gehalten ist. Auf der Distanzhülse 204 ist als Vorgelege ein Zwischenzahnrad 22a und axial versetzt ein Zwischenzahnrad 22b drehbar angeordnet, wie es insbesondere aus Figur 3 der Zeichnung zu entnehmen ist. Das Kopfstück 20 wird so komplettiert auf die Stirnseite des in Figur 6 der Zeichnung dargestellten Kartuschengehäuses 21 aufgesetzt und mit Schrauben 203 auf der Stirnseite befestigt. Hierbei gelangt das Zwischenzahnrad 22a mit dem Zahnradsegment 221 in das Zahnradritzel 21a in Eingriff, während das axial versetzt angeordnete Zwischenzahnrad 22b mit dem Zahnradsegment 211 in das Zahnradritzel 21b in Eingriff gelangt. Außerdem ist, wie es insbesondere auf Figur 3 der Zeichnung zu entnehmen ist, die Mischkammer 28 über ein Mischwasserkanal 280 mit einer an der oberen Stirnseite des Kopfstückes 20 koaxial zur Mittelachse 10 angeordneten Auslauföffnung 25 für Mischwasser verbunden. Am Übergangsbereich zwischen dem Kartuschengehäuse 21 und dem Kopfstück 20 ist hierbei eine Dichtung 281 vorgesehen. Beim Aufsetzen des Kopfstückes 20 werden außerdem die Lagerzapfen 210 der Zahnradritzel 21a, 21b in die entsprechenden Lagerbohrungen 2021 eingeführt. Mit der ballig ausgebildeten Mantelfläche 2100 der Lagerzapfen 210 wird hierbei ein Verkanten der Lagerung weitgehend ausgeschlossen.

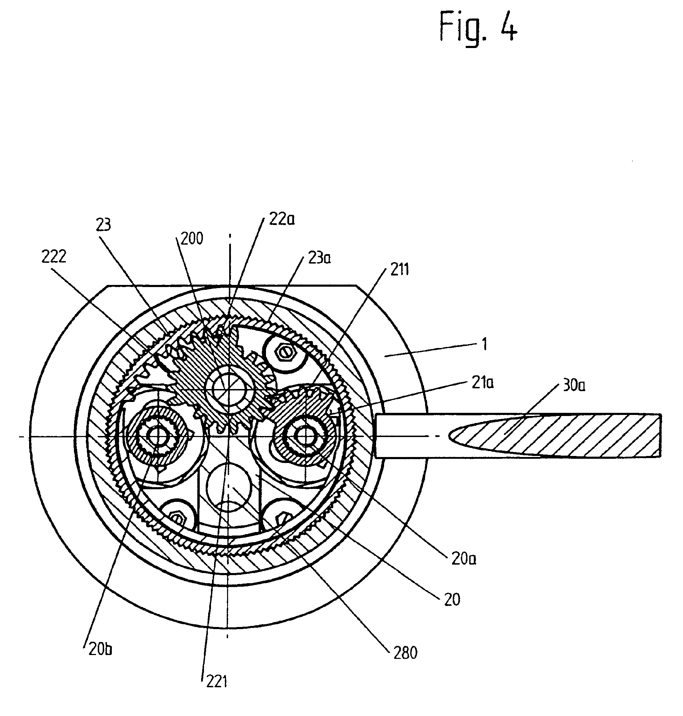

Die so komplettierte Ventilkartusche 2 kann als Baueinheit in die Öffnung 11 des Batteriegehäuses 1 ein- und ausgebaut werden. Sie wird dabei mit Spannschrauben 29 mit dem Batteriegehäuse 1 verbunden, wie es aus Figur 5 der Zeichnung zu entnehmen ist.
Auf das vorstehende Kopfstück 20 kann sodann nach dem Überstreifen eines Gleitlagerringes 31 die Betätigungseinrichtung 3a aufgebracht werden, wobei die ringförmige Betätigungseinrichtung 3a an der Innenwandung einen drehfest mit der Betätigungseinrichtung 3a verbundenen Verzahnungsring 23a mit einem Zahnradsegment 23 mit Innenverzahnung trägt. Das Zahnradsegment 23 greift dabei in ein erstes Zahnradsegment 222 des Zwischenrades 22a ein, während das zweite Zahnradsegment 221 mit dem Zahnradsegment 211 des Zahnradritzels 21a in Eingriff steht, wie es insbesondere aus Figur 4 der Zeichnung zu entnehmen ist.
Nach dem Aufbringen eines weiteren Gleitlagerringes 32 wird die ringförmige Betätigungseinrichtung 3b für Heißwasser auf das Kopfstück 20 aufgebracht. Hierbei ist ebenfalls ein Verzahnungsring 23b drehfest mit der Betätigungseinrichtung 3a verbunden, wobei ein Zahnradsegment 23 mit Innenverzahnung mit dem Zahnradsegment 222 des Zwischenzahnrades 22b in Eingriff steht. Dabei greift das Zwischenzahnrad 22b mit dem zweiten Zahnradsegment 221 in das Zahnradsegment 211 des Zahnradritzels 21b ein. Die beiden Zwischenzahnräder 22a, 22b haben identische Abmessungen.

Zur axialen Sicherung der Betätigungseinrichtungen 3a, 3b ist als Abschluss der Betätigungseinrichtung 3b ein weiterer Gleitlagerring 33 angeordnet. Zur Einstellung des axialen Spiels ist außerdem an dem Kopfstück 20 konzentrisch zur Auslassöffnung 25 ein rohrförmiger Ansatz 250 ausgebildet, auf dessen Außenmantel ein Gewinde 251 vorgesehen ist. Auf dem Gewinde 251 ist eine Ringmutter 252 angeordnet, an der der Gleitlagerring 31 anliegt und mit deren Hilfe das axiale Spiel der beiden Betätigungseinrichtungen 3a, 3b einstellbar ist.
Die Zahnradsegmente 211, 221, 222, 23 sind so ausgebildet und dimensioniert, dass ein Übersetzungsverhältnis von 1 : 1,6 erzielt wird. Durch eine Drehung der Betätigungseinrichtung 3a kann somit das Ventil 2a für Kaltwasser von der Absperrstellung zunehmend bis zur maximalen Öffnung gebracht werden und mit einer entgegengesetzten Drehrichtung wieder geschlossen werden. In gleicher Weise kann das Ventil 2b für Heißwasser betätigt werden, so dass einerseits Kaltwasser oder Heißwasser gezapft werden kann oder aber auch durch die wahlweise Öffnung beider Ventile 2a, 2b temperiertes Mischwasser gezapft werden kann.
Das in die Mischkammer 28 der Ventilkartusche 2 strömende Wasser gelangt über den Mischwasserkanal 280 zur Auslassöffnung 25. In der Auslassöffnung 25 ist ein Rohrnippel 40 gedichtet befestigt. Auf einem vorstehenden Teilbereich des Rohrnippels 40 ist der Auslaufkörper 4 axial mit einer Radialschraube 41 gesichert aber verschwenkbar gelagert, so dass das durch den Rohrnippel 40 hindurchströmende Wasser über den Auslaufkörper 4 an der Austrittsöffnung 400 als Freistrahl austreten kann.

## Patentansprüche

1. Mischbatterie mit einem Gehäuse, das Anschlüsse für Kalt- und Heißwasser sowie wenigstens einen Auslass für Kalt- und Heißwasser oder Mischwasser aufweist und in dem zwei parallel angeordnete Ventile (2a,2b) für den separaten Zufluss von Kalt- und Heißwasser vorgesehen sind, wobei die beiden Ventile (2a,2b) jeweils eine Ventilspindel (20a,20b) aufweisen, die einerseits mit einem Ventilglied und andererseits mit einem mit einer Betätigungseinrichtung (3a,3b) gekoppelten Zahnradritzel (21a,21b) verbunden ist, **dadurch gekennzeichnet, dass** die beiden Zahnradritzel (21a,21b) jeweils über als Vorgelege ausgebildete Zwischenzahnräder (22a, 22b) mit der Betätigungseinrichtung (3a,3b) verbunden sind.

2. Mischbatterie nach Anspruch 1, **dadurch gekennzeichnet, dass** die Zahnradritzel (21a, 21b) die Zwischenzahnräder (22a, 22b) sowie Verzahnungsringe (23a, 23b) in der Betätigungseinrichtung (3a, 3b) als Zahnradsegmente (211, 221, 222, 23) ausgebildet sind, wobei die Zwischenzahnräder (22a, 22b) jeweils zu einem Zahnrad mit zwei Zahnradsegmenten (221, 222) zusammengefasst sind, die unterschiedliche Radien aufweisen.

3. Mischbatterie nach Anspruch 1 oder 2, **dadurch gekennzeichnet, dass** die Zahnradritzel (21a, 21b) die Zwischenzahnräder (22a, 22b) und die Verzahnungsringe (23a, 23b) der Betätigungseinrichtung (3a, 3b) so dimensioniert sind, dass ein Übersetzungsverhältnis von etwa 1 : 1,6 besteht.

4. Mischbatterie nach wenigstens einem der vorhergehenden Ansprüche, **dadurch gekennzeichnet, dass** das Zahnradritzel (21a), das Zwischenzahnrad (22a) und der Verzahnungsring (23a) der Betätigungseinrichtung (3a) des Ventils (2a) für Kaltwasser axial versetzt zu dem Zahnradritzel (21b), dem Zwischenzahnrad (22b) und dem Verzahnungsring (23b) für die Betätigungseinrichtung (3b) des Ventils (2b) für Heißwasser angeordnet ist.

5. Mischbatterie nach wenigstens einem der vorhergehenden Ansprüche, **dadurch gekennzeichnet, dass** die beiden Zwischenzahnräder (22a, 22b) auf einer Achse (200) angeordnet sind.

6. Mischbatterie nach wenigstens einem der vorhergehenden Ansprüche, **dadurch gekennzeichnet, dass** die beiden Ventile (2a, 2b) mit ihren Zahnradritzeln (21a, 21b) und den beiden Zwischenzahnrädern (22a, 22b) in einer Ventilkartusche (2) angeordnet sind, welche in einer Öffnung (11) des Batteriegehäuses (1) als Einheit einsetzbar ist und die wenigstens eine Einlassöffnung (24a) für Kaltwasser und eine Einlassöffnung (24b) für Heißwasser sowie eine Auslassöffnung (25) für Mischwasser aufweist.

7. Mischbatterie nach Anspruch 6, **dadurch gekennzeichnet, dass** in der Ventilkartusche (2) Aufnahmebohrungen (240a, 240b) für die beiden Ventile (2a, 2b) vorgesehen sind, wobei jedes Ventil (2a, 2b) mit einem Ringbund (26a, 26b) in einer Aussenkung (241a, 241b) einfasst, derart, dass die Ventile (2a, 2b) in der Stecklage jeweils von einem O-Ring (27a, 27b) gedichtet drehbar aufgenommen sind, wobei für jedes Ventil (2a, 2b) ein Klemmring (201a, 201b) vorgesehen ist, mit dem jeweils das Ventil (2a, 2b) axial gegen eine Schulter (242a, 242b) in einer Aussenkung (241a, 241b) in der erforderlichen Drehstellung pressbar ist.

8. Mischbatterie nach wenigstens einem der vorhergehenden Ansprüche, **dadurch gekennzeichnet, dass** im Bereich der vorstehenden Ventilspindeln (20a, 20b) ein Kopfstück (20) an der Ventilkartusche (2) ausgebildet ist.

9. Mischbatterie nach Anspruch 8, **dadurch gekennzeichnet, dass** das Kopfstück (20) eine Aussparung (202) für die Zahnradritzel (21a, 21b) und die Zwischenzahnräder (22a, 22b) aufweist.

10. Mischbatterie nach Anspruch 9, **dadurch gekennzeichnet, dass** die Zwischenzahnräder (22a, 22b) von einer oberen und einer unteren Stirnseite (202a, 202b) der Aussparung (202) axial gesichert sind.

11. Mischbatterie nach wenigstens einem der vorhergehenden Ansprüche, **dadurch gekennzeichnet, dass** das Kopfstück (20) mit Schrauben (203) an der aus dem Batteriegehäuse (1) vorstehenden Stirnseite der Ventilkartusche (2) befestigt ist.

12. Mischbatterie nach wenigstens einem der vorhergehenden Ansprüche, **dadurch gekennzeichnet, dass** die Achse (200) mittels Gewinde (200a) in das Kopfstück (20) einschraubbar ist.

13. Mischbatterie nach wenigstens einem der vorhergehenden Ansprüche, **dadurch gekennzeichnet, dass** die Zahnradritzel (21a, 21b) jeweils einen axial vorstehenden Lagerzapfen (210) aufweisen, der in der Einbaulage von jeweils einer in der oberen Stirnseite (202a) angeordneten Lagerbohrung (2021) zur Führung und Stützung aufgenommen ist.

14. Mischbatterie nach Anspruch 13, **dadurch gekennzeichnet, dass** die Lagerzapfen (210) ballige Mantelflächen (2100) aufweisen.

15. Mischbatterie nach wenigstens einem der vorhergehenden Ansprüche, **dadurch gekennzeichnet, dass** von einer in der Ventilkartusche (2) ausgebildeten Mischkammer (28) ein Mischwasserkanal (280) gedichtet in das Kopfstück (20) geführt ist, wobei der Mischwasserkanal (280) in einer konzentrisch zur Mittelachse (10) der Ventilkartusche (2) ausgebildeten Öffnung (25) austritt.

16. Mischbatterie nach wenigstens einem der vorhergehenden Ansprüche, **dadurch gekennzeichnet, dass** die Verzahnungen der Zahnradritzel (21a, 21b), der Zwischenzahnräder (22a, 22b) und der Verzahnungsringe (23a, 23b) an den Betätigungseinrichtungen (3a, 3b) sich jeweils mit einem Zahnradsegment (211, 221, 222, 23) nur über einen Kreisbogen erstrecken, die dem jeweiligen maximalen Drehwinkel entsprechen.

17. Mischbatterien nach wenigstens einem der vorhergehenden Ansprüche, **dadurch gekennzeichnet, dass** die Zahnradritzel (21a, 21b) eine Markierung (211) tragen.

18. Mischbatterie nach wenigstens einem der vorhergehenden Ansprüche, **dadurch gekennzeichnet, dass** die Ventilkartusche (2) mit zwei diametral gegenüberliegend angeordneten Spannschrauben (29) im Batteriegehäuse (1) befestigt ist.

## Claims

1. Mixer tap having a housing, which has connections for cold and hot water as well as at least one outlet for cold and hot water or mixed water and in which two valves (2a, 2b) arranged in parallel are provided for separate inflow of cold and hot water, the two valves (2a, 2b) each having a valve shaft (20a, 20b) which at one end is connected to a valve member and at the other end is connected to a gearwheel pinion (21 a, 21b) coupled to an actuating device (3a, 3b), **characterized in that** the two gearwheel pinions (21 a, 21 b) are each connected to the actuating device (3a, 3b) by means of intermediate gearwheels (22a, 22b) in the form of a gear train.

2. Mixer tap according to claim 1, **characterized in that** the gearwheel pinions (21a, 21b), the intermediate gearwheels (22a, 22b) as well as toothed rings (23a, 23b) in the actuating device (3a, 3b) are in the form of gearwheel segments (211, 221, 222, 23), the intermediate gearwheels (22a, 22b) in each case being combined to form one gearwheel having two gearwheel segments (221, 222) of different radii.

3. Mixer tap according to claim 1 or 2, **characterized in that** the gearwheel pinions (21a, 21b), the intermediate gearwheels (22a, 22b) and the toothed rings (23a, 23b) of the actuating device (3a, 3b) are so dimensioned that a transmission ratio of about 1 : 1.6 is obtained.

4. Mixer tap according to at least one of the preceding claims, **characterized in that** the gearwheel pinion (21a), the intermediate gearwheel (22a) and the toothed ring (23a) of the actuating device (3a) of the valve (2a) for cold water is arranged axially offset with respect to the gearwheel pinion (21 b), the intermediate gearwheel (22b) and the toothed ring (23b) for the actuating device (3b) of the valve (2b) for hot water.

5. Mixer tap according to at least one of the preceding claims, **characterized in that** the two intermediate gearwheels (22a, 22b) are arranged on one shaft (200).

6. Mixer tap according to at least one of the preceding claims, **characterized in that** the two valves (2a, 2b) with their gearwheel pinions (21 a, 21 b) and the two intermediate gearwheels (22a, 22b) are arranged in a valve cartridge (2) which is installable as a unit in an opening (11) of the tap housing (1) and which has at least an inlet opening (24a) for cold water and an inlet opening (24b) for hot water as well as an outlet opening (25) for mixed water.

7. Mixer tap according to claim 6, **characterized in that** in the valve cartridge (2) there are provided receiving bores (240a, 240b) for the two valves (2a, 2b), each valve (2a, 2b) fitting by means of an annular collar (26a, 26b) into a recess (241a, 241b) so that the valves (2a, 2b) in the inserted position are each received rotatably and sealed by an O-ring (27a, 27b), there being provided for each valve (2a, 2b) a clamping ring (201 a, 201 b) with which the respective valve (2a, 2b) is arranged to be pressed axially against a shoulder (242a, 242b) in a recess (241a, 241b) in the required rotated position.

8. Mixer tap according to at least one of the preceding claims, **characterized in that** a head piece (20) is formed on the valve cartridge (2) in the region of the projecting valve shafts (20a, 20b).

9. Mixer tap according to claim 8, **characterized in that** the head piece (20) has a space (202) for the gearwheel pinions (21a, 21b) and the intermediate gearwheels (22a, 22b).

10. Mixer tap according to claim 9, **characterized in that** the intermediate gearwheels (22a, 22b) are secured axially by an upper and a lower end face (202a, 202b) of the space (202).

11. Mixer tap according to at least one of the preceding claims, **characterized in that** the head piece (20) is fixed with screws (203) on the end face of the valve cartridge (2) that projects out of the tap housing (1).

12. Mixer tap according to at least one of the preceding claims, **characterized in that** the shaft (200) can be screwed into the head piece (20) by means of a thread (200a).

13. Mixer tap according to at least one of the preceding claims, **characterized in that** the gearwheel pinions (21a, 21b) each have an axially projecting bearing pin (210) which in the installed position is received by a bearing bore (2021) arranged in the upper end face (202a) for the purpose of guidance and support.

14. Mixer tap according to claim 13, **characterized in that** the bearing pins (210) have convex outer surfaces (2100).

15. Mixer tap according to at least one of the preceding claims, **characterized in that** from a mixing chamber (28), which is formed in the valve cartridge (2), a mixed water channel (280) extends, sealed, into the head piece (20), the mixed water channel (280) emerging at an opening (25) formed concentrically with the centre axis (10) of the valve cartridge (2).

16. Mixer tap according to at least one of the preceding claims, **characterized in that** the toothed portions of the gearwheel pinions (21a, 21b), of the intermediate gearwheels (22a, 22b) and of the toothed rings (23a, 23b) on the actuating devices (3a, 3b) in each case extend with a gearwheel segment (211, 221, 222, 23) over only an arc of a circle which corresponds to the respective maximum angle of rotation.

17. Mixer tap according to at least one of the preceding claims, **characterized in that** the gearwheel pinions (21 a, 21 b) carry a marking (211).

18. Mixer tap according to at least one of the preceding claims, **characterized in that** the valve cartridge (2) is fixed in the tap housing (1) with two diametrally opposed clamping screws (29).

## Revendications

1. Robinet mélangeur comprenant un corps muni de branchements pour de l'eau froide et de l'eau chaude ainsi que d'au moins une sortie pour l'eau froide et l'eau chaude ou l'eau mélangée et logeant deux vannes (2a, 2b) branchées en parallèle pour le passage séparé de l'eau chaude et de l'eau froide,
les deux vannes (2a, 2b) ayant chacune une broche (20a, 20b) reliée par une extrémité à un organe de vanne et par l'autre, à un pignon denté (21a, 21b) couplé à un dispositif d'actionnement (3a, 3b),
**caractérisé en ce que**
les deux pignons dentés (21a, 21b) sont reliés au dispositif d'actionnement (3a, 3b) par une transmission intermédiaire formée de pignons intermédiaires (22a, 22b).

2. Robinet mélangeur selon la revendication 1.
**caractérisé en ce que**
les pignons dentés (21a, 21b), les pignons dentés intermédiaires (22a, 22b) ainsi que des bagues dentées (23a, 23b) du dispositif d'actionnement (3a, 3b) sont réalisés sous la forme de segments de pignon denté (211, 221, 222, 23),
les pignons dentés intermédiaires (22a, 22b) étant constitués par un pignon denté à deux segments dentés (221, 222) ayant des rayons différents.

3. Robinet mélangeur selon la revendication 1 ou 2,
**caractérisé en ce que**
les pignons dentés (21a, 21b), les pignons dentés intermédiaires (22a, 22b) et les bagues dentées (23a, 23b) du dispositif d'actionnement (3a, 3b) sont dimensionnés pour avoir un rapport de démultiplication de l'ordre de 1 : 1,6.

4. Robinet mélangeur selon au moins l'une des revendications précédentes,
**caractérisé en ce que**
le pignon denté (21a), le pignon denté intermédiaire (22a) et la bague dentée (23a) du dispositif d'actionnement (3a) de la vanne (2a) de l'eau froide sont décalés axialement par rapport au pignon denté (21b), au pignon denté intermédiaire (22b) et à la bague dentée (23b) du dispositif d'actionnement (3b) de la vanne (2b) de l'eau chaude.

5. Robinet mélangeur selon au moins l'une des revendications précédentes,
**caractérisé en ce que**
les deux pignons dentés intermédiaires (22a, 22b) sont installés sur un axe (200).

6. Robinet mélangeur selon au moins l'une des revendications précédentes,
**caractérisé en ce que**
les deux vannes (2a, 2b) et leurs pignons dentés (21a, 21b) ainsi que les deux pignons dentés intermédiaires (22a, 22b) sont installés dans une cartouche de robinet (2) qui se place comme un module dans une cavité (11) du corps (1) du robinet et comporte au moins un orifice d'entrée (24a) pour l'eau froide et un orifice d'entrée (24b) pour l'eau chaude ainsi qu'un orifice de sortie (25) pour l'eau mélangée.

7. Robinet mélangeur selon la revendication 6,
**caractérisé en ce que**
la cartouche de robinet (2) comporte des perçages de réception (240a, 240b) pour les deux vannes (2a, 2b),
chacune des vannes (2a, 2b) étant logée avec une collerette annulaire (26a, 26b) dans une cavité (241a, 241b) de façon que les vannes (2a, 2b) soient logées de manière étanche en rotation en position engagée, chaque fois à l'aide d'un joint torique (27a, 27b),
et chaque vanne (2a, 2b) comporte une bague de serrage 201a, 201b) qui pousse axialement la vanne respective (2a, 2b) dans la position de rotation nécessaire contre un épaulement (242a, 242b) dans la cavité (241a, 241b).

8. Robinet mélangeur selon au moins l'une des revendications précédentes,
**caractérisé en ce que**
la cartouche (2) comporte une pièce de tête (20) au niveau de la broche de vanne (20a, 20b) en saillie.

9. Robinet mélangeur selon la revendication 8,
**caractérisé en ce que**
la pièce de tête (20) comporte un dégagement (202) pour les pignons dentés (21a, 21b) et les pignons dentés intermédiaires (22a, 22b).

10. Robinet mélangeur selon la revendication 9,
**caractérisé en ce que**
les pignons dentés intermédiaires (22a, 22b) sont fixés axialement par la face frontale supérieure et la face frontale inférieure (202a, 202b) de la cavité (202).

11. Robinet mélangeur selon au moins l'une des revendications précédentes,
**caractérisé en ce que**
la pièce de tête (20) est fixée par des vis (203) à la face frontale de la cartouche (2) en saillie du corps de robinet (1).

12. Robinet mélangeur selon au moins l'une des revendications précédentes,
**caractérisé en ce que**
l'axe (200) se visse dans la pièce de tête (20) à l'aide d'un filetage (200a).

13. Robinet mélangeur selon au moins l'une des revendications précédentes,
**caractérisé en ce que**
les pignons dentés (21a, 21b) ont chacun un tourillon de palier (210) axialement en saillie et logé en position de montage dans un perçage de palier (2021) respectif dans la face frontale supérieure (202a) pour assurer le guidage et l'appui.

14. Robinet mélangeur selon la revendication 13,
**caractérisé en ce que**
les tourillons de palier (210) ont une surface-enveloppe bombée (2100).

15. Robinet mélangeur selon au moins l'une des revendications précédentes,
**caractérisé en ce qu'**
un canal d'eaux mélangées (280) arrive de manière étanche dans la pièce de tête (20) à partir d'une chambre de mélange (28) réalisée dans la cartouche de robinet (2),
le canal d'eaux mélangées (280) débouchant dans un orifice (25) concentrique à l'axe (10) de la cartouche (2).

16. Robinet mélangeur selon au moins l'une des revendications précédentes,
**caractérisé en ce que**
la denture des pignons dentés (21a, 21b), celle des pignons dentés intermédiaires (22a, 22b) et celle des bagues dentées (23a, 23b) des dispositifs d'actionnement (3a, 3b) correspondent respectivement à un segment denté (211, 221, 222, 23) qui ne s'étend que sur un arc de cercle correspondant à l'angle de rotation maximum respectif.

17. Robinet mélangeur selon au moins l'une des revendications précédentes,
**caractérisé en ce que**
les pignons dentés (21a, 21b) portent un repère (211).

18. Robinet mélangeur selon au moins l'une des revendications précédentes,
**caractérisé en ce que**
la cartouche (2) est fixée dans le corps (1) du robinet par deux vis (29) diamétralement opposées.
